Europäisches Patentamt

European Patent Office

Office européen des brevets

(11) Veröffentlichungsnummer: **0 118 592**
**B1**

(12) **EUROPÄISCHE PATENTSCHRIFT**

(45) Veröffentlichungstag der Patentschrift:
11.06.86

(51) Int. Cl.⁴: **G 01 M 11/08, G 01 B 11/16**

(21) Anmeldenummer: 83110453.4

(22) Anmeldetag: 20.10.83

(54) Zugfester Draht mit eingeschlossenem Lichtwellenleiter-Sensor.

(30) Priorität: 16.02.83 DE 3305234

(43) Veröffentlichungstag der Anmeldung:
19.09.84 Patentblatt 84/38

(45) Bekanntmachung des Hinweises auf die Patenterteilung:
11.06.86 Patentblatt 86/24

(84) Benannte Vertragsstaaten:
AT BE CH FR GB IT LI NL SE

(56) Entgegenhaltungen:
EP - A - 0 082 820
DE - A - 3 112 422
GB - A - 2 058 394

(73) Patentinhaber: Felten & Guilleaume Energietechnik AG, Schanzenstrasse 24-30 Postfach 80 50 01, D-5000 Köln 80 (DE)

(72) Erfinder: Levacher, Friedrich Karl, Dr., Medardusstrasse 24, D-5024 P. Brauweiler (DE)
Erfinder: Federmann, Helmut, Dr., Holunderweg 17, D-5060 Berg. Gladbach (DE)

LIBER, STOCKHOLM 1986

## Beschreibung

Die Erfindung betrifft einen zugfesten Draht aus einer faserverstärkten Harzstruktur mit einem darin eingeschlossenen Lichtwellenleiter (LWL). Sie bezweckt eine optische Überwachung des zugfesten Drahtes besonders auf Zug, Bruch oder Biegung, und sie kann beispielsweise als Spannbetondraht Verwendung finden.

Aus der DE-A- 30 16 009 ist ein Verfahren zur Herstellung faserverstärkter Harzstrukturen bekannt, bei dem die in einer Richtung durch die Apparatur gezogenen Fasern zunächst mit Harz durchtränkt, dann in warmer Luft mit einer harten gelförmigen Oberfläche versehen und schließlich durch ein Metallschmelzbad geführt werden, das auf einer Temperatur zwischen etwa 95° C und der Zersetzungstemperatur des Harzes gehalten wird. Das zugeführte Harz hat eine durch Wärme vernetzende, wärmehärtende Zusammensetzung, die bei Umgebungstemperatur oder erhöhten Temperaturen im flüssigen Zustand gehalten wird. Die Art des wärmehartenden Harzes kann stark variieren und u. a. Epoxidharze, Polyimide, Polyester, Phenolformaldehyd-Harze, Silicon-Harze u. dgl. umfassen. Das Verfahren läßt sich bei allen bekannten Fasermaterialien einsetzen, beispielsweise bei Glasfasern, Stahlfasern, Aramid-Fasern (eingetr. Warenzeichen), Graphitfasern u. dgl.. Die Fasern können andere Fasern einschließen, welche durch andere Schutzschichten ummantelt sind, beispielsweise weiche Metallfasern wie Kupfer oder optische Fasern. Die Strukturen können beliebigen Querschnitt haben und können elektrische Leiter, Lichtwellenleiter, Fluidleitungen u. dgl. enthalten, die damit von der faserverstärkten Harzstruktur umgeben werden, deren Form durch Formdüsen oder -matrizen bestimmt wird.

So kann man bei diesem Verfahren etwa eine optische Faser (Lichtwellenleiter) als Zentralfaser in die sie umgebenden Verstärkungsfasern einlaufen lassen, wobei der LWL mit einem Trennmittel beschichtet wird, an welches das Harz nicht anklebt. Damit wird der LWL mehr oder weniger lose von dem faserverstärkten ausgehärteten Harzkäfig umgeben, der von dem LWL ohne das Aufbrechen von Klebeverbindungen zwischen dem Harz und dem LWL abgezogen werden kann.

Ein hochfester Faser-Verbundwerkstoff, bei dem in einer Richtung orientierte Glasfasern mit Polyesterharz verbunden sind, wird von der Bayer AG, Leverkusen unter dem eingetragenen Warenzeichen Polystal auf den Markt gebracht. Im Zusammenhang mit LWL ist er bisher nur als Bewehrungsmaterial für optische Nachrichtenkabel verwendet worden. Bei diesen Kabeln wird immer darauf geachtet, daß der LWL in seinen äußeren Mantel lose eingelegt ist, damit zum einen äußere Kräfte von ihm möglichst ferngehalten werden und zum anderen die verschiedenen Dehnungen zwischen ihm und dem Mantel ausgeglichen werden. Ein solches Beispiel ist in der DE-A- 31 12 422 angegeben.

Es ist weiter bekannt, LWL zur Bruchüberwachung von auf Zug beanspruchten Bauteilen einzusetzen. So ist in der DE-A- 29 37 824 ein Verfahren beschrieben, bei dem der LWL auf das zu überwachende Bauteil aufgeklebt oder in dieses eingelegt ist, wobei das erste vorzugsweise bei Bauteilen aus Metall, das zweite bei solchen aus Kunststoff oder Beton angewendet wird. Bei diesem Verfahren sind Anfang und Ende der LWL mit einem Licht-Durchgangsprüfgerät verbunden, womit die Lichtleitung (Dämpfung) laufend oder in Zeitabständen überwacht wird, die als Maß für die Dehnung und Bruchgefährdung des Bauteils benutzt wird.

Ausgehend von dem eingangs genannten zugfesten Draht aus einer faserverstärkten Harzstruktur mit einem darin eingeschlossenen LWL liegt der Erfindung die Aufgabe zugrunde, den Draht mit dem LWL so auszubilden, daß eine optische Überwachung des Drahtes besonders auf Zug, Bruch oder Biegung stattfinden kann.

Diese Aufgabe wird bei einem Draht der eingangs genannten Art erfindungsgemäß dadurch gelöst, daß der Lichtwellenleiter von einer Zwischenschicht umschlossen ist, die eine inhomogene Struktur hat, daß Lichtwellenleiter, Zwischenschicht und Draht über ihre ganze Länge mechanisch fest miteinander verbunden sind, und daß der Lichtwellenleiter an seinen beiden Enden Anschlüsse für ein Licht-Durchgangsprüfgerät besitzt. Vorzugsweise besteht die Zwischenschicht nach einer Weiterbildung der Erfindung aus Kunststoff oder Kunstharz, denen ein definiert fein gekörntes Pulver aus Glas, Quarz, Korund oder Schmirgel zugesetzt ist. Sie kann aber auch aus harzdurchtränkten Glasfasern bestehen, die wendelförmig auf den Lichtwellenleiter aufgebracht sind. Hierzu kann sie auch als erste Lage der faserverstärkten Harzstruktur aufgebracht sein.

Die Erfindung liegt im wesentlichen in dem inhomogenen Aufbau der Schicht zwischen LWL und Draht, und in der festen Verbindung dieser drei Elemente. Diese Zwischenschicht kann auch als Sekundärschicht bezeichnet werden, da jede optische Faser unmittelbar nach ihrer Herstellung zum Schutz eine dünne Primärbeschichtung aus Kunstharz erhält. Da bei einer Dehnung des gespannten Drahtes dessen Querschnitt abnimmt, treten in diesem Fall Querkräfte auf, die von der inhomogenen Zwischenschicht auf den LWL übertragen werden und dort Mikrokrümmungen erzeugen. Diese bewirken einen Dämpfungsanstieg, der als Maß für die Dehnung benutzt wird.

Diese Effekte und damit die Anzeigeempfindlichkeit können noch dadurch verstärkt werden, daß nach der weiteren Erfindung der beschichtete Lichtwellenleiter im Inneren des Drahtes exzentrisch angeordnet ist. Diese Anordnung eignet sich besonders zur Überwachung von Biegebeanspruchungen. Im gleichen Sinn wirkt, wenn im Inneren des Drahtes zwei miteinander verseilte, beschichtete Lichtwellenleiter angeordnet sind.

Der Vorteil der Erfindung liegt darin, daß man auf einfache Weise eine Prüfmöglichkeit für die zugfesten Drähte aus Faser-Verbundwerkstoff und für Bauwerke oder Bauteile erhält, in die solche Drähte eingebaut sind. Prüfung und Überwachung lassen sich nicht nur auf Zug, Bruch oder Biegung, sondern auch auf andere von LWL registrierte Größen, wie Strahlenbelastung durchführen. Die Erfindung läßt sich auch bei langgestreckten Profilkörpern, oder bei Rohren und Hohlprofilen beim Einbau des oder der beschichteten LWL in deren Wand, anwenden.

Ausführungsbeispiele der Erfindung sind in der Zeichnung dargestellt und werden im folgenden näher beschrieben. Es zeigen

Fig. 1 einen Draht aus Faser-Verbundwerkstoff mit einem zentrisch angeordneten, beschichteten LWL,

Fig. 2 einen Draht mit zwei zentrisch angeordneten, miteinander verseilten, beschichteten LWL und

Fig. 3 als Anwendungsbeispiel eine Brücke mit eingelegten Spanndrähten gemäß der Fig. 1 und dem angeschlossenen Licht-Durchgangsprüfgerät.

Bezeichnet sind mit:

1 Draht aus Faser-Verbundwerkstoff (faserverstärkte Harzstruktur)

2 Lichtwellenleiter

3 Inhomogene Zwischenschicht (Sekundärschicht)

4 Spannbeton-Brücke (mit Spanndrähten 1)

5 Meßenden (Anschlüsse)

6 Zuführungsleitungen

7 Licht-Durchgangsprüfgerät (Sender/Empfänger).

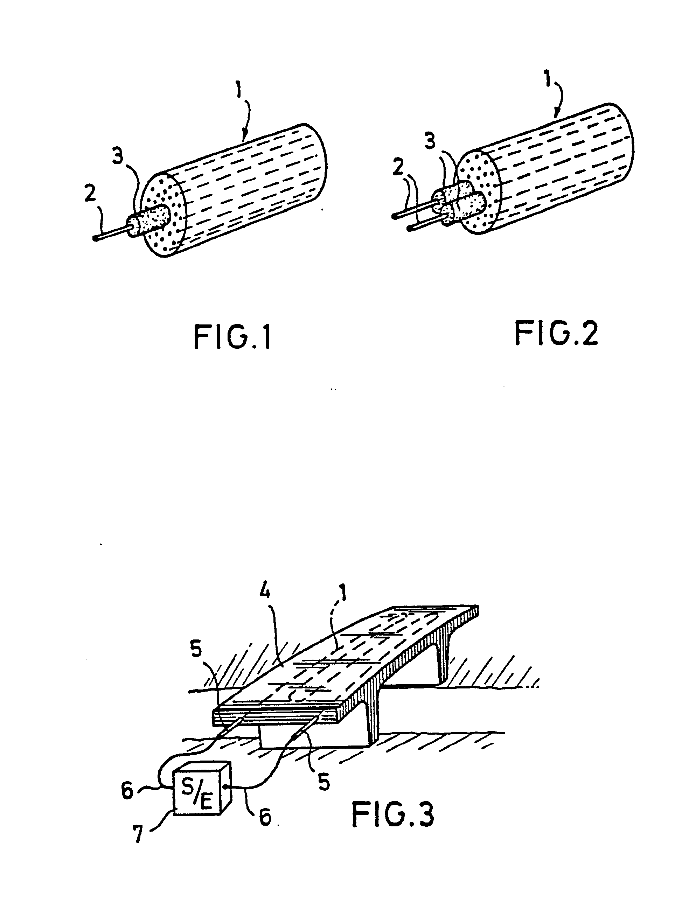

Bei der Anordnung nach Fig. 1 besitzt der LWL an seinen beiden Enden Anschlüsse (nicht gezeichnet) einerseits für einen Lichtsender, andererseits für einen Lichtempfänger. Die Anordnung nach Fig. 2 eignet sich besonders zur Überwachung von Bauteilen, in denen nur ein Draht aus faserverstärkter Harzstruktur untergebracht ist und der von einer Seite gemessen werden soll. In diesem Fall dient der eine LWL als Hinleiter und der andere als Rückleiter, wobei beide LWL am fernen Ende optisch aneinander gekoppelt sind.

Fig. 3 zeigt ein Anwendungsbeispiel. Der LWL-Sensor befindet sich hier in dem mäanderartig eingelegten Spanndraht 1 einer Brücke 4 aus Spannbeton. Die Meßenden 5 des LWL sind über die Zuführungsleitungen 6 mit dem Kontrollgerät (S/E) 7 verbunden, das eine laufende mechanische Überwachung der gesamten Brücke gestattet.

Ein weiteres Anwendungsbeispiel ist die Überwachung strahlenbelasteter Räume mittels der Anordnung nach Fig. 2. In diesem Fall wird einer der beiden LWL mit einem entsprechend dotierten Glas als Strahlensensor ausgebildet und so lose in den Faser-Verbunddraht eingelegt, daß mechanische Veränderungen des Faser-Verbunddrahtes mit Ausnahme des Drahtrisses nicht zu Dämpfungsänderungen führen. Der andere LWL wird, wie bereits ausgeführt, fest im Faser-Verbunddraht verankert. Auf diese Weise liefert ein Vergleich der Dämpfungsänderungen Informationen darüber, ob eine strahlenphysikalische, eine mechanische Belastung oder beide Belastungsarten vorliegen.

## Patentansprüche

1. Zugfester Draht (1) aus einer faserverstärkten Harzstruktur mit einem darin eingeschlossenen Lichtwellenleiter (2), dadurch gekennzeichnet, daß der Lichtwellenleiter (2) von einer Zwischenschicht (3) umschlossen ist, die eine inhomogene Struktur hat, daß Lichtwellenleiter (2), Zwischenschicht (3) und Draht (1) über ihre ganze Länge mechanisch fest miteinander verbunden sind, und daß der Lichtwellenleiter (2) an seinen beiden Enden Anschlüsse (5) für ein Licht-Durchgangsprüfgerät (6) besitzt.

2. Zugfester Draht nach Anspruch 1, dadurch gekennzeichnet, daß die Zwischenschicht (3) aus Kunststoff oder Kunstharz besteht, denen ein definiert fein gekörntes Pulver von Glas, Quarz, Korund oder Schmirgel zugesetzt ist.

3. Zugfester Draht nach Anspruch 1, dadurch gekennzeichnet, daß die Zwischenschicht (3) aus harzdurchtränkten Glasfasern besteht, die wendelförmig auf den Lichtwellenleiter (2) aufgebracht sind.

4. Zugfester Draht nach einem der Ansprüche 1 bis 3, dadurch gekennzeichnet, daß die Zwischenschicht (3) als erste Lage der faserverstärkten Harzstruktur aufgebracht ist.

5. Zugfester Draht nach einem der Ansprüche 1 bis 3, dadurch gekennzeichnet, daß der beschichtete Lichtwellenleiter (2+3) im Inneren des Drahtes (1) exzentrisch angeordnet ist.

6. Zugfester Draht nach einem der Ansprüche 1 bis 3, dadurch gekennzeichnet, daß im Inneren des Drahtes (1) ein weiterer beschichteter Lichtwellenleiter (2+3) angeordnet ist.

## Claims

1. Tensionally resistant cable (1) made from a fibre-reinforced resin structure incorporating an optical fibre (2), characterised in that the optical fibre (2) is surrounded by an intermediate layer (3), which has an inhomogeneous structure, the optical fibre (2), the intermediate layer (3) and the cable (1) are securely connected to one another by mechanical means over their entire length, and the optical fibre (2) comprises connections (5) at both ends for a light transmission testing device (6).

2. Tensionally resistant cable according to claim 1, characterised in that the intermediate layer (3) is made from plastics material or synthetic resin, to which is added a powder, granulated to a defined degree of fineness, of glass, quartz, corundum, or emery.

3. Tensionally resistant cable according to claim 1, characterised in that the intermediate layer (3) comprises resin-impregnated glass fibres, which are arranged in the manner of a coil around the optical fibre (2).

4. Tensionally resistant cable according to any one of claims 1 to 3, characterised in that the intermediate layer (3) is arranged as the first layer of the fibre-reinforced resin structure.

5. Tensionally resistant cable according to any one of claims 1 to 3, characterised in that the covered optical fibre (2 and 3) is arranged eccentrically inside the cable (1).

6. Tensionally resistant cable according to any one of claims 1 to 3, characterised in that a further coated optical fibre (2 and 3) is arranged inside the cable (1).

## Revendications

1. Câble (1) résistant à la traction et qui est constitué d'une structure de résine renforcée par des fibres dans laquelle est inclu un conducteur à fibre optique (2), câble caractérisé en ce que le conducteur à fibre optique (2) est entouré par une couche intermédiaire (3) qui a une structure non-homogène, et en ce que le conducteur à fibre optique (2) la couche intermédiaire (3) et le câble (1) sont solidaires mécaniquement les uns des autres sur la totalité de leur longueur, tandis que le conducteur à fibre optique (2) comporte à ses deux extrémités, des raccordements (5) pour un appareil de contrôle du passage de la lumière (6).

2. Câble résistant à la traction selon la revendication 1, caractérisé en ce que la couche intermédiaire (3) est constituée d'une matière plastique ou d'une résine synthétique, à laquelle est ajoutée une poudre définie finement granulée de verre, de quartz, de corindon ou d'émeri.

3. Câble résistant à la traction selon la revendication 1, caractérisé en ce que la couche intermédiaire (3) est constituée de fibres de verre imprégnées de résine qui sont rapportées en forme d'hélice sur le conducteur à fibre optique (2).

4. Câble résistant à la traction selon une des revendications 1 à 3, caractérisé en ce que la couche intermédiaire (3) est rapportée en tant que première couche de la structure de résine renforcée par des fibres.

5. Câble résistant à la traction selon une des revendications 1 à 3, caractérisé en ce que le conducteur à fibre optique revêtu (2 + 3) est disposé excentriquement à l'intérieur du câble (1).

6. Câble résistant à la traction selon une des revendications 1 à 3, caractérisé en ce qu'un autre conducteur à fibre optique revêtu (2 + 3) est disposé à l'intérieur du câble (1).

FIG.1          FIG.2

FIG.3